# EUROPEAN PATENT APPLICATION

(11) **EP 2 055 183 A2**
(43) Date of publication of application: **06.05.2009**
(21) Application number: 08167868.2
(22) Date of filing: 29.10.2008
(51) Int. Cl.: A01K 1/00, A01K 1/02

(54) **Locking principle for a rear gate in a pen**

(30) Priority: 29.10.2007 DK 200701544
(71) Applicant: Egebjerg International A/S, 4500 Nykobing S (DK)
(72) Inventor: Sørensen, Sonny Torben Hedal, 4572 Nørre Asmindrup (DK); Rasmussen, Henrik, 4500 Nykøbing Sjælland (DK)
(74) Representative: Nielsen, Leif

(57) **Abstract**

A pen (1) for domestic animals, preferably sows, the pen having a size such that one of these animals can stay in the pen. The pen has a rear gate (4) which is hinged horizontally and positioned above the animal's back in the open position. The rear gate (4) has a release mechanism for releasing the rear gate (4) from the closed condition. The release mechanism is adapted to allow release of the gate from closed condition by a rearwards directed push against the rear gate by the animal in the pen. Furthermore, the release mechanism includes a pivoting arm (28) on the rear gate, the pivoting arm being connected with a barb (26) for releasing the barb from engagement with a fitting (24) when the pivoting arm is moved rearwards.

## Description

### Field of the Invention

The present invention concerns a pen for domestic animals, preferably sows, the pen having a size such that one of these animals may stay in the pen, where the pen has a rear gate which is hinged horizontally and positioned above the animal's back in the open position. The rear gate has a release mechanism for releasing the rear gate from the closed condition, where the release mechanism is adapted to allow release of the gate from closed condition by a rearwards directed push against the rear gate by the animal in the pen. The release mechanism includes a pivoting arm on the rear gate connected with a barb for releasing the barb from engagement with a fitting.

### Background of the Invention

The invention will be explained by an example of an embodiment of the invention, where the pen is a feed box/rest box intended for a sow. However, the invention is quite general and not limited to this application only.

Such a rear gate for pens is known from EP 1 346 632 where the pen has a feeding trough at the front end of the pen, and a front gate which via a connection means is connected with the rear gate such that opening the front gate causes closing of the rear gate, and opening the rear gate causes closing the front gate. The rear gate is hinged horizontally and positioned above the animal's back in the open condition.

Such pens are used in stable systems arranged for untethered flocks of sows. Feeding of untethered sows in a stable occurs such that a flock of sows stay in a bedding area, after which the sows by themselves find an empty pen, where they close the gate behind them by pushing the front gate. The sows may now eat undisturbedly. A central locking system for the pens preventing opening of the rear gate provides that all sows remain in their pen until the feeding has ended, after which the central locking system is disengaged again. The system with the pens ensures that all sows are provided the amount of feed which they need. It may be the same amount of feed to all sows, but individual allocation of feed as well.

This separation of the sows during feeding is important as the hierarchy in a flock may cause weak sows to be pushed aside by stronger sows and are thereby not given enough feed. Pens of the above described type are also used by the sows for rest without being disturbed by other sows.

In order that the keeper or the veterinarian is provided easy access to the pen, the rear gate is provided with an opening between the support members of the rear gate which extend in direction towards the outer edge of the rear gate, where the opening is open upwards and has a size that prevents passage of the domestic animal through the opening, but allows passage of a human through the rear gate. The latter is achieved in that the opening has a width largely corresponding to a typical boot width such that the person can move his legs through the opening.

The rear gate illustrated in the drawing to EP 1 346 632 has appeared in practice to be difficult to open for a sow, as the illustrated rear gate has to be pushed back in one side in order to cause an opening. If the sow is pushing the opposite side, large forces are needed for opening the gate, and sometimes the sow's attempt to open the gate fails, which is a drawback for the box.

A rear gate of the type indicated in the introduction is known from FR 2 811 512. By this rear gate it is possible to use a pivoting arm instead of moving the entire rear gate. For the animal, e.g. a sow, it is hereby easier to operate the release mechanism.

### Object of the Invention

Therefore, it is the purpose of the invention to provide a pen with an opening mechanism for the rear gate which is simple to make and which is easy to operate for the domestic animal.

### Description of the Invention

This purpose is achieved by a pen for domestic animals, preferably sows, the pen having a size such that one of these animals can stay in the pen. The pen has a rear gate which is hinged horizontally and positioned above the animal's back in the open condition. The rear gate has a release mechanism for releasing the rear gate from the closed condition. The release mechanism is adapted to allow releasing of the gate from closed condition by a rearwards directed push by the animal in the pen against the rear gate. Furthermore, the release mechanism includes a pivoting arm on the rear gate, where the pivoting arm is connected with a barb for releasing the barb from engagement with a fitting when the pivoting arm is moved rearwards.

Moreover, the barb is provided on an arm connected to the pivoting arm via a rotatable pivot fitting provided around a rod. The rod may preferably be one of the rods forming the rear gate. The pivoting arm is connected with a first end of the pivot fitting, and the arm is fastened to a second end of the pivot fitting. The two ends of the pivoting fitting is provided at each their side of the rod.

Use of an arm furthermore provides that there are more degrees of freedom with regard to positioning of the arm on the rear gate, whereby the arm may easily be adapted to the conditions of the pen and the animals staying in the pen. The barb may thus be disposed in a practical way and simple operation may be established as the pivoting arm is connected with one end of the pivot fitting, the other end of which is connected with the arm.

In a further embodiment, the barb is provided at one side of a movable arm while at the opposite side of the arm there is provided an additional barb for forming a movable anchor-shaped arrangement with oppositely directed barbs. This may e.g. be utilised as a double function arrangement with fittings for engaging the barbs from both sides of the anchor-shaped arrangement. A fitting is preferably provided at one side of the anchor-shaped arrangement for engaging the barb when the anchor-shaped arrangement is moved in direction against the fitting. In addition, at the opposite side of the anchor-shaped arrangement there may be provided a movable locking fitting for moving in direction against the further barb for, by engaging the additional barb, locking the arrangement for preventing opening of the gate, for example by locking the arrangement in vertical direction.

In a very useful embodiment, the pivoting arm is hinged about a horizontal axis at its lower end. In that way it is prevented that the animal will get jammed under the pivoting arm, or just actuating it when rising from a lying position.

Advantageously, the pivoting arm has an approximately U-shaped cross-section with the curving part directed towards the front of the pen. Such a pivoting arm is stable and light and has a shape which is comfortable for the sow to press on.

Moreover, it is advantageous if the pivoting arm has a point of gravity located in front of the rear gate when the rear gate is in the closed position, as the pivoting arm then falls in towards the pen when closing the rear gate, thereby pressing the barb into engagement with the interacting fitting.

If the rear gate includes a grate arrangement with a centre section and with a side section at each side of the centre section, the pivoting arm may suitably be hinged on the centre section of the rear gate.

With a rear gate that includes a grate arrangement with a centre section and with a side section at each side of the centre section, where the centre section is provided with an upper part and a lower part, it is advantageous if the lower part bends backwards in relation to the upper part, i.e. in direction away from the interior of the pen, as the sow then may have less tendency to get its tail pinched.

The rear gate is advantageously provided with an opening between the supporting side members of the rear gate which extend in direction towards the outer edge of the rear gate where the opening is open upwards and has a size that prevents passage of the domestic animal through the opening but allows passage of a human through the rear gate, where the transition from the sides of the opening to the supporting side members form a right or acute angle, and where the angle has a sharp edge. Such a sharp edged transition is e.g. provided by the sides of the opening being provided at the side of the supporting side members, or the supporting side members being fitted on the sides of the opening. If the gate is formed of iron piping and/or iron sections, it is suitable that the transition is provided by welding. In case that the sides of the opening and the supporting side members are provided by pipes, there may be achieved a transition by bending these pipes. In this case, the transition is curving with a small radius of curvature which is less than twice the pipe diameter, preferably less than 1.5 times the pipe diameter, in order to provide sufficient safety for a sow jumping up upon the rear gate.

### Description of the Drawing

The invention is explained in more detail in the following with reference to the Figures, where:
- Fig. 1: shows a catch pen according to the invention;
- Fig. 2a: shows the rear end of a catch box, and Fig. 2b shows an enlarged detail thereof;
- Fig. 3a: shows the rear end with the rear gate in closed condition, and Fig. 3b in the open condition, respectively;
- Fig. 4a: shows unlocked condition, and Fig. 4b shows a locked condition;
- Fig. 5: is a photo of the closing mechanism in unlocked condition as seen from above;
- Fig. 6: is a photo of the closing mechanism in unlocked condition, but in engagement, as seen from the outer side of the box;
- Fig. 7: is a photo illustrating the release mechanism;
- Fig. 8: is a photo of the closing mechanism in unlocked condition and disengaged, as seen from the outer side of the box;
- Fig. 9: is a photo of the closing mechanism in unlocked condition and without engagement as seen from above; and
- Fig. 10: is a photo of the closing mechanism in locked condition as seen from the outer side of the box.

### Detailed Description of the Invention

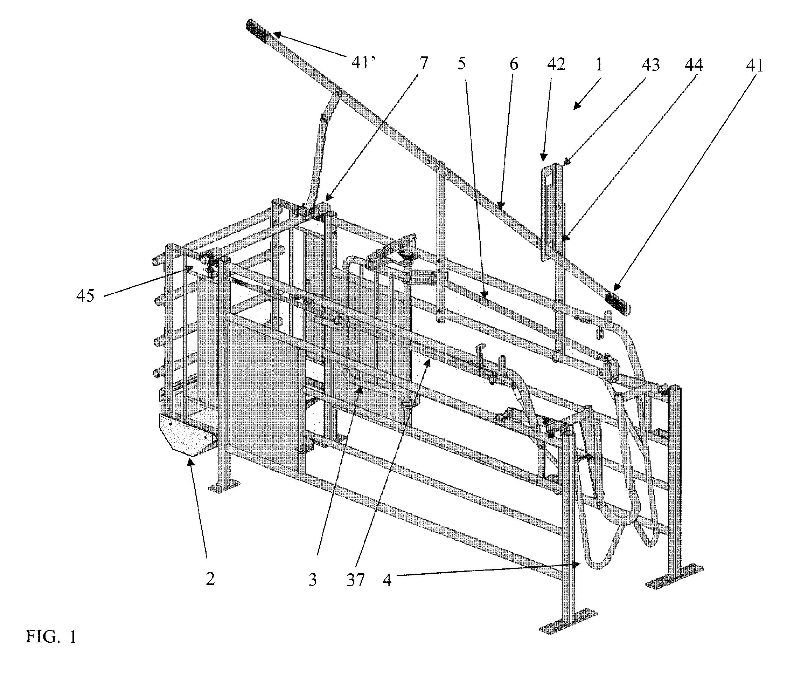

Fig. 1 shows a catch box (or feed/rest box) according to the invention in perspective view where the pen 1 has a feed trough 2 at the front part of the pen 1, a front gate 3 and a rear gate 4. The rear gate 4 is connected with the front gate 3 via a connection device 5 such that opening the front gate 3 causes closing of the rear gate 4, and opening the rear gate 4 causes closing of the front gate 3. A sow treading into the pen 1 may close the pen 1 by pushing the front gate 3 forwards from closed to open condition, whereby the sow is provided access to the trough, and whereby the rear gate 4 closes for admission of other sows into the pen 1. In order to make certain that the sow cannot leave the pen 1 again during feeding, the pen 1 is provided with a central locking mechanism which includes a central locking bar 6 for engaging a transverse rod 7. The central locking mechanism may be actuated and disengaged from a central position, e.g. by a lever 41, 41' as shown in Fig. 1. The rear gate 4 is hinged horizontally and positioned above the sow's back in the open condition.

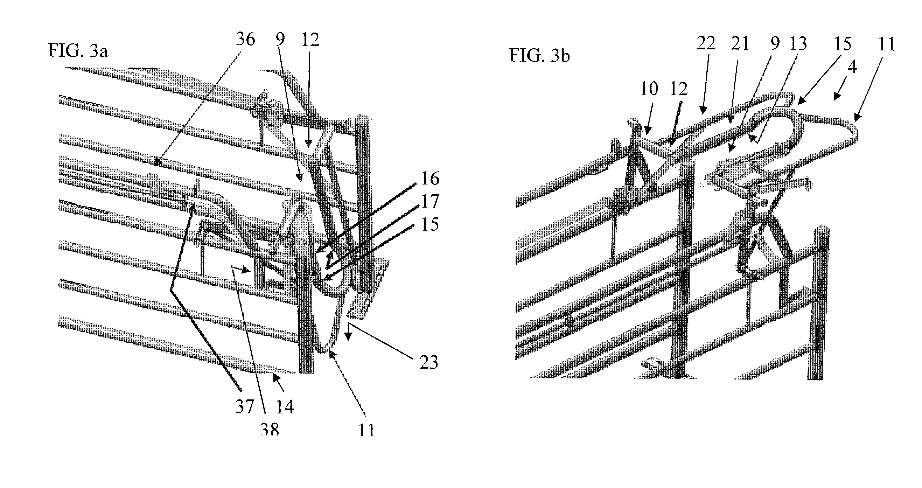

For the greater part, the catch box according to the invention is designed as the catch box in the European patent publication EP 1 346 632, but differing in the design of the rear end with the rear gate and by the central locking mechanism. In Fig. 3a, the gate is shown in the closed condition and in Fig. 3b in the open condition. Like the gate in EP 1 346 632, the gate has an opening 9 which is open upwards and has a size preventing passage of the sow through the opening 9, but allowing passage of a human through the rear gate 4. The transition 12 on the rear gate 4 from the sides 13 of the opening 9 to the supporting side members 10 form a right or acute angle, and the angle is sharply edged.

The rear gate 4 includes a grate arrangement with a centre section 21 and side sections 22, where the side sections 22 extend farther down towards the bottom 23 of the pen than the centre section 21. Typically, the lower edge 11 of the side sections 22 will be flush with the lowermost pipe 14 at the side of the pen, e.g. 16 cm above the pen bottom. In that the centre section 21 does not extend as far down as the side sections 22 it is ensured that the centre section 21 is above the coccyx of a lying sow. It is thereby prevented that the centre section 21 chafes the coccyx of the lying sow, particularly the underside of the tail which is sensitive on the sow. On the other hand, the side sections 22 will ensure that the sow does not slide in under the rear gate 4 when the sow lies down. The centre section has a lower part 15 and an upper part 16. The upper part 16 extends rectilinearly until the transition 17 to the lower part 15, after which the centre section 21 bends backwards in the lower part 15. By such a bent arrangement, there is less risk that the sow's tail will be pinched than if the lower part lies in the same plane as the upper part 16 of the centre section 21.

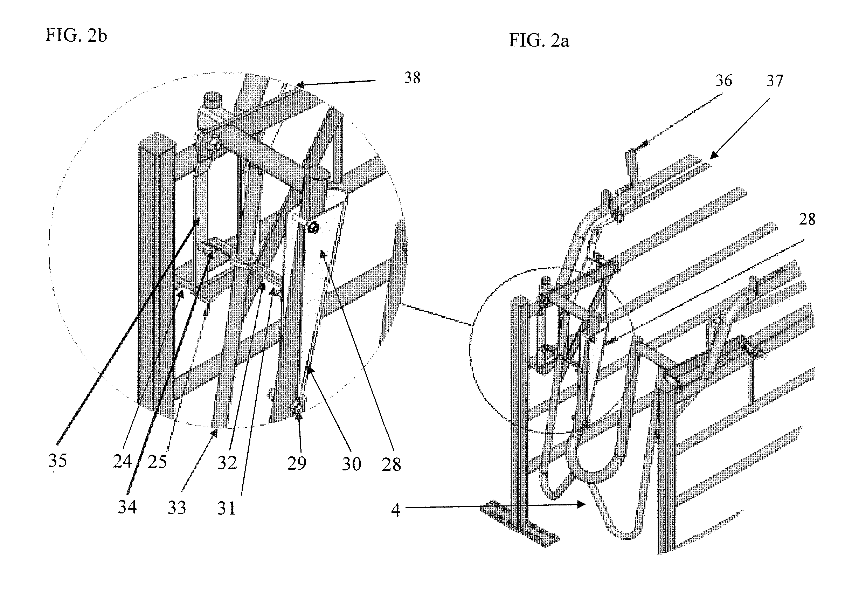

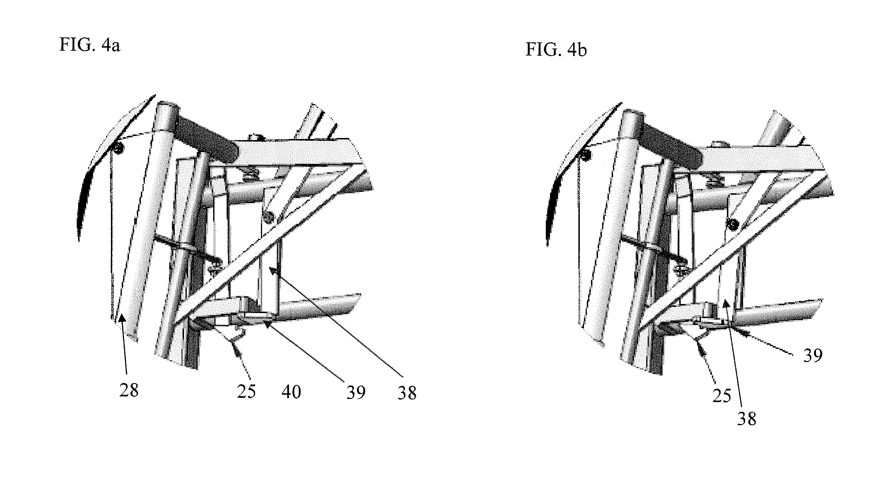

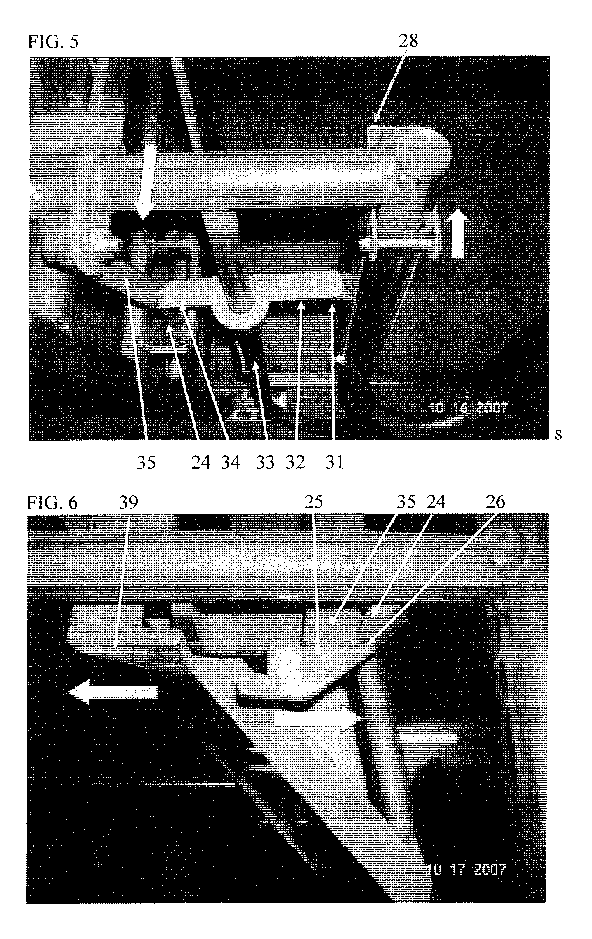

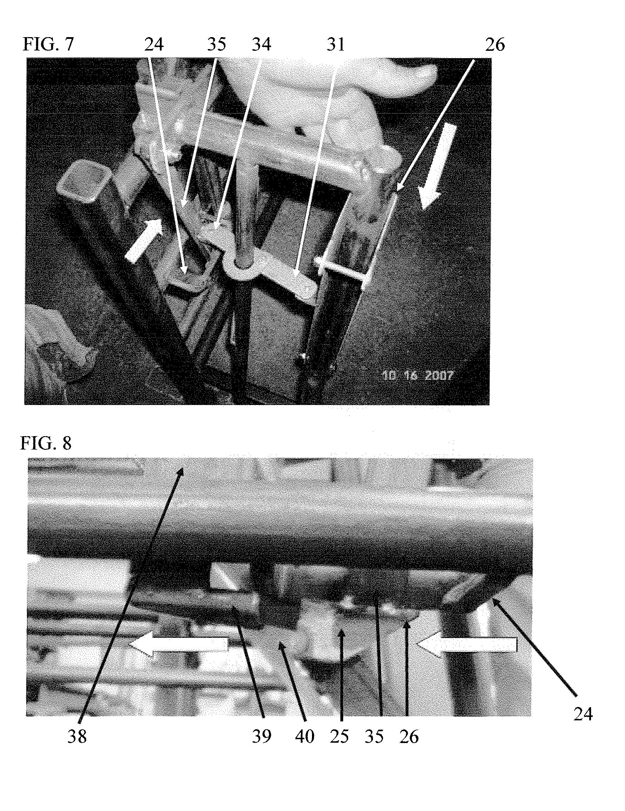

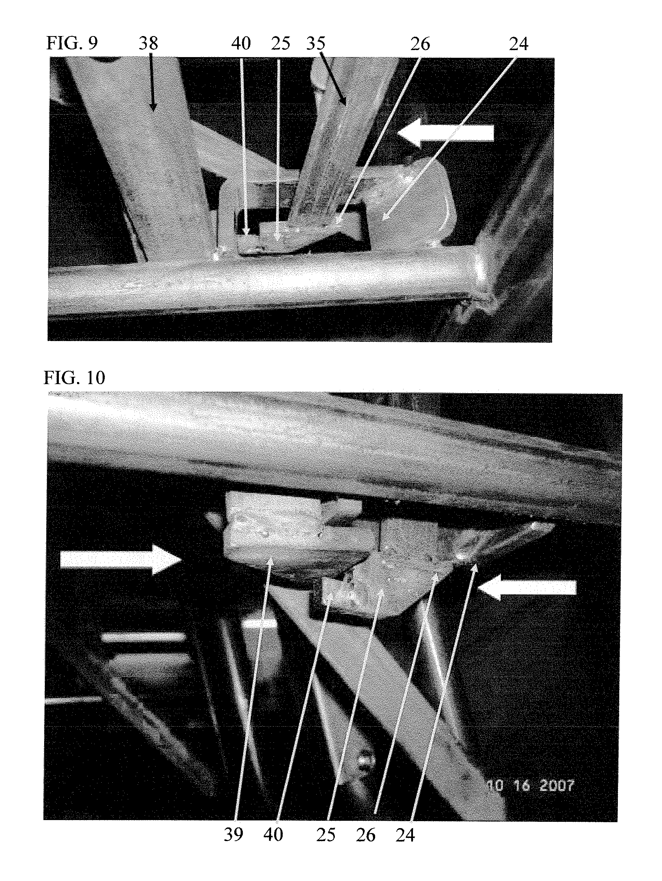

When the gate is closed, as shown on Fig. 2a and in enlarged section on Fig. 2b, the gate 4 is retained in that a first barb 26 of a locking catch 25 engages under a first fitting 24, which is shown in greater detail on Fig. 6 showing a photo of a prototype as seen from the outer side of the pen, i.e. from the same side as in Fig. 3a but from a slightly lower angle. As shown on Fig. 6, the catch may pivot back and forth between a position where the locking catch 25 with its barb 26 grips under the fitting 24, and a position where the catch 25 goes free of the fitting, which is shown on Figs. 8 and 9. In the latter position, the rear gate 4 may be lifted free by a rearwards push of the sow. The barb 26 of the catch 25 may be released from the fitting 24 by pressing the pivoting arm 28 rearwards. The pivoting arm 28 is rotatably fastened by a pivot connection 29 at its lower end 30. The arm 28 may thereby be pivoted from a first position shown on Fig. 2b to a second position shown on Fig. 4a. The pivoting arm 28 is connected with one end 31 of a pivoting fitting 32 that may rotate about the straight rod 33 of the side section 22. The opposite end 34 of the pivot fitting is fastened to the arm 35 of the locking catch 25. By pivoting the pivoting arm 28 one way, the catch arm 35 will move the opposite way, which is clearly seen on Fig. 7. When the pivoting arm 28 is thus pressed rearwards by the sow, the catch 25 will be pressed in the opposite direction in order to be released from the fitting 24 so that the sow may push up the gate 4 by adding pressure. The combination of the catch 25 and the pivoting arm 28 is thus a release mechanism.

In some cases, however, it may be desired that the sow does not leave its pen. The pen therefore has a locking mechanism which may be actuated and prevent the gate from being pushed up. This locking mechanism may be actuated by pushing lever 36 shown on Fig. 2a rearwards in direction against the gate.

Thereby, rod 37 is pushed rearwards, whereby a locking fitting 38, see Figs. 3a and 4b, at the end of the this rod 37 is also moving rearwards, pushing the plate 39 connected with this fitting rearwards, which is best shown in Figs. 10 and 4b compared with Figs. 8 and 4a, the plate 39 thereby blocking passage of the catch 25 in upwards direction as the catch is provided with an additional barb 40 engaging under the plate 39 when the latter is pushed forwards.

From the above appears that the locking mechanism can be used for locking for opening a single box by pushing the rod 37 rearwards by manual operation of lever 36. However, the rod 37 may also be pushed rearwards by means of a central locking mechanism which is adapted for pushing a number of rods 37 of pens rearward in order thereby to lock several pens at the same time. Such a locking mechanism is shown on Fig. 1 where a central locking bar 6 with lever 41, 41' is provided in a fitting 42, where the central locking bar 6 may be in a lower locked position 44 and an upper locked position 43, respectively. Moving the central locking bar 6 results in turning of the transverse rod 7 which by a device 45 adapted therefor operates the rod 37 such that it is moved.

The rear gate 4 is shown as a system of pipes and sections. It is, however, possible to design the rear gate 4 in other ways, e.g. with plates.

## Claims

1. A pen (1) for domestic animals, preferably sows, the pen having a size such that one of these animals may stay in the pen, where the pen has a rear gate (4) which is hinged horizontally and positioned above the animal's back in the open position, the rear gate (4) having a release mechanism (28, 32, 35, 25, 24) for releasing the rear gate (4) from the closed condition, where the release mechanism is adapted to allow release of the gate from closed condition by a rearwards directed push against the rear gate by the animal in the pen, where the release mechanism includes a pivoting arm (28) on the rear gate connected with a barb (26) for releasing the barb (26) from engagement with a fitting (24), **characterised in that** the barb (26) is disposed on an arm (35) connected to the pivoting arm (28) via rotatable pivot fitting (32) provided around a rod (33), that the pivoting arm (28) is connected with a first end (31) of the pivot fitting (32) and the arm (35) is fastened to a second end (34) of the pivot fitting (32), and that the two ends (31, 34) of the pivot fitting are disposed at each their side of the rod (33).

2. A pen according to claim 1, **characterised in that** the barb (26) is provided at one side of a movable arm (35), while an additional barb (40) is provided at the opposite side of the arm (35) for forming a movable anchor-shaped arrangement with oppositely directed barbs (26, 40), where a fitting (24) is provided at one side of the anchor-shaped arrangement for engaging the barb (26) when the anchor-shaped arrangement (25) is moved in direction towards the fitting, where at the opposite side of the anchor-shaped arrangement there is further provided a movable locking fitting (38, 39) for moving in direction against the further barb (40) for locking the arrangement in vertical direction by engaging the additional barb (40).

3. A pen according to claim 1 or 2, **characterised in that** the pivoting arm (28) is hinged about a horizontal axis (29) at its lower end (30).

4. A pen according to any preceding claim, **characterised in that** the pivoting arm (28) has an approximately U-shaped cross-section with the curving part directed towards the front of the pen.

5. A pen according to claim 3 or 4, **characterised in that** the pivoting arm (28) has a point of gravity located in front of the rear gate (4) when the rear gate (4) is in the closed position, in order that the pivoting arm falls in towards the pen when closing the rear gate (4), thereby pressing the barb (26) into engagement with an interacting fitting (24).

6. A pen according to claim 3, 4 or 5, **characterised in that** the rear gate (4) includes a grate arrangement with a centre section (21) and with a side section (22) at each side of the centre section (21), and that the pivoting arm is hinged on the centre section of the rear gate.

7. A pen according to any preceding claim, **characterised in that** the rear gate (4) includes a grate arrangement with a centre section (21) and with a side section (22) at each side of the centre section (21), where the centre section (21) is provided with an upper part (16) and a lower part (15), the lower part (15) bending backwards in relation to the upper part (16).

8. A pen according to any preceding claim, **characterised in that** the pen is a catch pen for a sow.
